# EUROPEAN PATENT APPLICATION

(11) **EP 2 228 571 A1**
(43) Date of publication of application: **15.09.2010**
(21) Application number: 10002652.5
(22) Date of filing: 12.03.2010
(51) Int. Cl.: F16J 15/43

(54) **Magnetic fluid rotary feedthrough with sensing and communication capability**

(30) Priority: 12.03.2009 US 159458 P
(71) Applicant: Ferrotec (UK), Ltd., Skeffington Street, Woolwich London SE18 6SR (GB)
(72) Inventor: Brooks, Douglas A., Woodford Green Essex IG8 9JT (GB); Lewcock, Jeffrey C., Frien Barnet London N11 3LR (GB); Johansen, David, New Boston NH 03070 (US)
(74) Representative: Katérle, Axel

(57) **Abstract**

A magnetic fluid rotary feedthrough (100) has a multi-stage magnetic fluid rotary seal (160) adapted to provide a magnetic fluid seal about a shaft (140) for extending between a first environment and a second environment, one or more sensors (210) integrally mounted within the magnetic fluid rotary feedthrough to sense one or more physical parameters of the multi-stage magnetic fluid rotary seal, signal processing electronics mounted to or incorporated in the magnetic fluid rotary feedthrough to receive one or more sensor output signals from the one or more sensors, to process the one or more sensor output signals and to output one or more electronic processing signals, and one or more output devices (220) electrically coupled to receive the one or more electronic processing signals from the signal processing electronics to indicate the condition of the multi-stage magnetic fluid rotary seal.

## Description

This application claims the benefit of US Provisional Patent Application No. 61/159,458, filed March 12, 2009.

### BACKGROUND OF THE INVENTION

### 1. Field of the Invention

The present invention relates generally to the field of magnetic fluid seals. Particularly, the present invention relates to a multi-stage magnetic fluid seal assembly. More particularly, the present invention relates to magnetic fluid rotary feedthroughs.

### 2. Description of the Prior Art

Magnetic fluid feedthroughs have been developed for use in vacuum systems where they perform the function of providing a virtually hermetic rotating seal. These products rely on the entrapment of magnetic fluid and its ability to withstand a pressure differential when magnetically trapped. Vacuum feedthroughs are designed to withstand low pressures on the order of 1 to 2 atmospheres and are impervious to all gases.

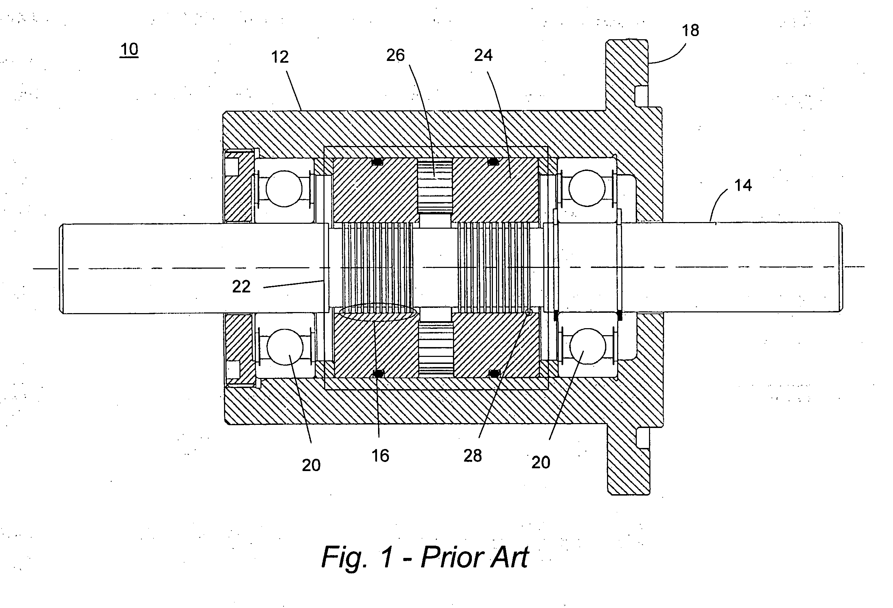

A conventional design of a magnetic fluid feedthrough is illustrated in Figure 1. A magnetic fluid rotary feedthrough 10 typically has a housing 12 and a rotary shaft 14 that extends out of housing 12. Shaft 14 is magnetically permeable and has two sets of stages or teeth 16. Housing 12 is typical of a conventional feedthrough using a standard vacuum compatible flange 18 for mounting the rotary feedthrough 10 to a vacuum chamber. Shaft 14 is usually supported by a pair of bearings 20 that are disposed on either side of the magnetic fluid seal 22. The magnetic fluid seal 22 consists of two stationary, magnetically-permeable elements 24, which are referred to as pole-pieces. Pole-pieces 24 carry magnetic flux from a permanent magnet or magnets 26, disposed between the pole-pieces 24. The magnetic flux is concentrated at the shaft 14 by a series of stages or teeth 16 cut into shaft 14. The shape of these stages or teeth 16 can be rectangular or triangular. Magnetic fluid or ferrofluid 28 is trapped within the concentrated magnetic flux and acts as "liquid o-rings" at stages 16. Shaft 14 is rotated usually by an electric motor, which can be external or integrated into housing 12.

Magnetic fluids or ferrofluids are colloidal suspensions of magnetic particles in a continuous phase. Colloidal stability is achieved by the use of a suitable surfactant. The continuous phase is selected on the basis of the application and, for a vacuum application, this is an oil with a very low vapor pressure. The volume fraction of the magnetic particles is low, typically around 5-10%. However, owing to the surrounding surfactant layer, the effective volume fraction is significantly larger than the particle volume fraction.

When magnetic fluid is trapped by magnetic forces, the liquid o-rings are able to resist an external pressure and therefore act as a seal. These seals are hermetic and, being non-contacting, do not produce contamination making them ideal for processes conducted within a vacuum chamber. The shaft is usually driven by a motor or some other means and rotary motion is transferred from the outside into the clean environment of the vacuum chamber.

Such feedthroughs have been shown to successfully operate from a few revolutions per hour up to several tens of thousands of revolutions per minute. Pressure capability extends from ultra high vacuum to many tens of atmospheres. Leak rates are almost immeasurable at values of 1x10⁻¹¹ cc/sec or lower. Operating temperature vary from as low as -55°C to +200°C or even higher with suitable protective measure.

Magnetic fluid or ferrofluid rotary feedthroughs are commonly used in vacuum systems where a hermetic, non-contaminating seal is required; systems typified by semiconductor, precision optics and solar cell manufacture. In all cases, these rotary feedthroughs are high precision components utilizing precision bearings and often including integrated motors and encoders. The systems they are typically used on are high value capital equipment and the expected uptime of the entire system can be as high as 99%. Many of these systems, particularly in the semiconductor environment, are operated under clean room conditions where entry by people is restricted.

The maintenance of a good vacuum in the equipment is essential and the rotary vacuum feedthrough is regarded as an item of critical importance. While the reliability of these feedthroughs is excellent, there is still a need for preventative maintenance. There are circumstances such as over temperature or contamination where the integrity of the feedthrough can be compromised.

In the case of solar cell manufacture where rotary vacuum feedthroughs are an integral part of the transportation mechanism and where there can be many hundred of such feedthroughs in operation on a single machine, it is often very difficult to identify one feedthrough in many where there is a problem with feedthrough integrity. This is particularly difficult in the case of an intermittent or sporadic fault. Often, the only evidence that a feedthrough is leaking is when atmospheric contamination of the product is observed rendering it unusable. Additionally, the offending rotary feedthrough needs locating and replacing, which is not a trivial exercise in a chamber that could be as much as 100 meters long with over 200 rotary feedthroughs. Once the offending feedthrough is located and replaced the chamber needs to be re-evacuated, a process that can take many days resulting in a loss of production.

Therefore, what is needed is a rotary feedthrough that is more easily maintained. What is also needed is a rotary feedthrough that is more easily identified when the rotary feedthrough is about to fail.

### SUMMARY OF THE INVENTION

Magnetic fluid rotary feedthroughs are often seen as critical components in the equipment where they are used to maintain a dynamic rotary seal over extended periods of time and diverse operating conditions. Dynamic rotary vacuum sealing is a very difficult problem to solve particularly as any leak of atmospheric gases into the vacuum chamber can result in contamination of the product resulting in either loss of yield or complete ruination of the product. Consequently, magnetic fluid rotary feedthroughs have become the accepted standard and under normal operating conditions these feedthroughs are very reliable, operating successfully without servicing for many years. Indeed, it is the very reliability of these devices that leads users to assume that they will continue operating without attention indefinitely. However, it must be recognized that exposure of the magnetic fluid to a very high vacuum, particularly if the process is at a high temperature, can result in a slow and steady evaporation of the oil. The evaporation rate is mainly dependant on the level of the vacuum and the temperature, both of which tend to change over the operating life of the product. However, for high quality magnetic fluids, operating even at very high temperatures, the evaporation is at such an extremely low rate it takes place over many years. Therefore, it makes any decision of "if" and "when" to service the feedthrough particularly difficult to define.

Feedthroughs, especially those operating at high speeds or high loads, are particularly demanding on the bearings. These demands are magnified as bearing lubricants that are compatible with vacuum operation are not particularly good compared to conventional bearing lubricants. Therefore, failure of,the bearing within the vacuum environment is often observed while the bearing on the atmosphere side, often lubricated with a good quality conventional lubricant, remains in excellent condition. There is considerable supporting data to enable the prediction of bearing life using conventional lubricants and this enables preventative maintenance cycles to be accurately specified. There is little supporting data, however, on the demands of operating in a vacuum environment with relatively poor lubricants. The wide variation in life over diverse operating conditions coupled with the large error band on any supporting data makes the definition of a suitable maintenance schedule very difficult.

For both of the above reasons, low evaporation rates and difficulty in defining bearing life, magnetic fluid feedthroughs are either replaced at unnecessarily short intervals or, alternatively, not replaced at all until they fail. Neither solution represents a satisfactory situation for a component often seen as having critical importance. It is advantageous to be able to monitor the condition of feedthroughs and signal their condition to operators or diagnostic equipment.

Therefore, it is an object of the present invention to provide a rotary feedthrough that is capable of indicating the condition of the rotary feedthrough. It is another object of the present invention to provide a rotary feedthrough that is capable of indicating the condition of the rotary feedthrough to enable maintenance when required of the feedthrough at a scheduled shut down. It is a further object of the present invention to provide a rotary feedthrough with a means to easily identify a potentially failing rotary feedthrough among a plurality of rotary feedthroughs. It is still another object of the present invention to provide a rotary feedthrough that is capable of providing an advanced warning of a potential problem with the rotary feedthrough. It is yet another object of the present invention to enable identification of a problem feedthrough in a degraded condition operating amongst a plurality of feedthroughs.

The present invention achieves these and other objectives by providing a magnetic fluid rotary feedthrough system with a combination of one or more integral sensors, signal processing electronics and one or more output devices or devices.

In one embodiment, a magnetic fluid rotary feedthrough system includes a multi-stage magnetic fluid rotary seal adapted to provide a magnetic fluid seal about a shaft which extends between a first environment and a second environment, and a combination of one or more sensors, signal processing electronics and one or more output devices operatively connected to the signal processing electronics that work together to constantly monitor and indicate the condition of the multistage magnetic fluid seal. The one or more sensors are integrally mounted within the magnetic fluid rotary feedthrough to sense one or more physical parameters of the one or more components of the multi-stage magnetic fluid rotary seal. The one or more components include the pole piece, the magnet and the shaft. The signal processing electronics are mounted to or incorporated in the magnetic fluid rotary feedthrough. The signal processing electronics receive one or more sensor output signals from the one or more sensors, process the sensor output signals and outputs one or more electronic processing signals. The output device or devices receive the electronic processing signals from the signal processing electronics to indicate the condition of the multi-stage magnetic fluid seal.

In another embodiment of the present invention, the one or more sensors include, but are not limited to, pressure sensors, temperature sensors, magnetic field sensors, vibration sensors, rotational speed sensors, acoustic wave sensors, torque sensors, chemical sensors, coolant flow rate sensors, coolant temperature sensors, and humidity sensors. The sensors may be contact or noncontact sensors.

In yet another embodiment of the present invention, the one or more sensors may include two or more of the same sensors located in different locations within the feedthrough for measuring differential values for pressure, temperature, magnetic field strength, vibration, and acoustics.

In a further embodiment of the present invention, the signal processing electronics transmits one or more sensor signals of the one or more integral sensors.

In another embodiment of the present invention, the sensor signals and/or the electronic processing signals are digital signals, analog signals, or a combination of digital and analog signals. Optionally, the sensor signals and/or the electronic processing signals may be transmitted by directly electrically coupling the transmitting and receiving components or by wirelessly coupling the components.

In still another embodiment of the present invention, the signal processing electronics contains a computational circuit for determining the rate of change over time of a measured physical parameter measured by the one or more sensors.

In another embodiment, a temperature sensor is adapted to sense the temperature of one or more components of the multi-stage magnetic fluid rotary seal. These components include, but are not limited to, a pole piece, a magnet or the shaft.

In still another embodiment of the present invention, there is a method of determining the condition of a magnetic fluid rotary feedthrough that includes incorporating a combination of one or more sensors integrally mounted in the magnetic fluid rotary feedthrough and signal processing electronics mounted on or in the magnetic fluid rotary feedthrough. The signal processing electronics are electrically coupled to the sensors for receiving and manipulating the sensor signals from the sensors. The method also provides for one or more output devices to be electrically coupled to the signal processing electronics for receiving one or more electronic processing signals from the signal processing electronics and to monitor the output device(s) to determine the condition of the magnetic fluid seal of the rotary feedthrough.

In another embodiment of the present invention, there is a method to determine the condition of a magnetic fluid rotary seal that includes monitoring the output device(s) that displays various characteristics of the magnetic fluid seal as interpreted by the signal processing electronics of the sensor output signals of the one or more different, integrally-mounted sensors. The parameters being measured are either compared to a predetermined threshold value or, if two or more similar sensors are used, the difference in the measured parameters of the two or more similar sensors is compared to a predetermined threshold value. If the measured parameters are outside of the acceptable range (i.e. the measured parameter exceeds the threshold value(s)), the output device(s) issue a warning signal related to the condition of the magnetic fluid seal.

In yet another embodiment of the present invention, there is a method of using two or more of the same sensor integrally mounted in different locations within a rotary feedthrough to provide a differential measurement when the seal is in a degraded condition.

### BRIEF DESCRIPTION OF THE DRAWINGS

FIGURE 1 is a cross-sectional view of one embodiment of a prior art magnetic fluid rotary feedthrough showing the shaft, magnet, pole pieces, support bearings and magnetic fluid disposed in a housing.

FIGURE 2 is a partial cross-sectional view of one embodiment of the present invention showing a magnetic fluid rotary feedthrough with pressure and temperature sensors and an Ethernet connection.

FIGURE 3 is a simplified, side view of one embodiment of the present invention showing a magnetic fluid rotary seal containing at least two temperature sensors positioned on the pole pieces of the seal.

### DETAILED DESCRIPTION OF THE PREFERRED EMBODIMENT

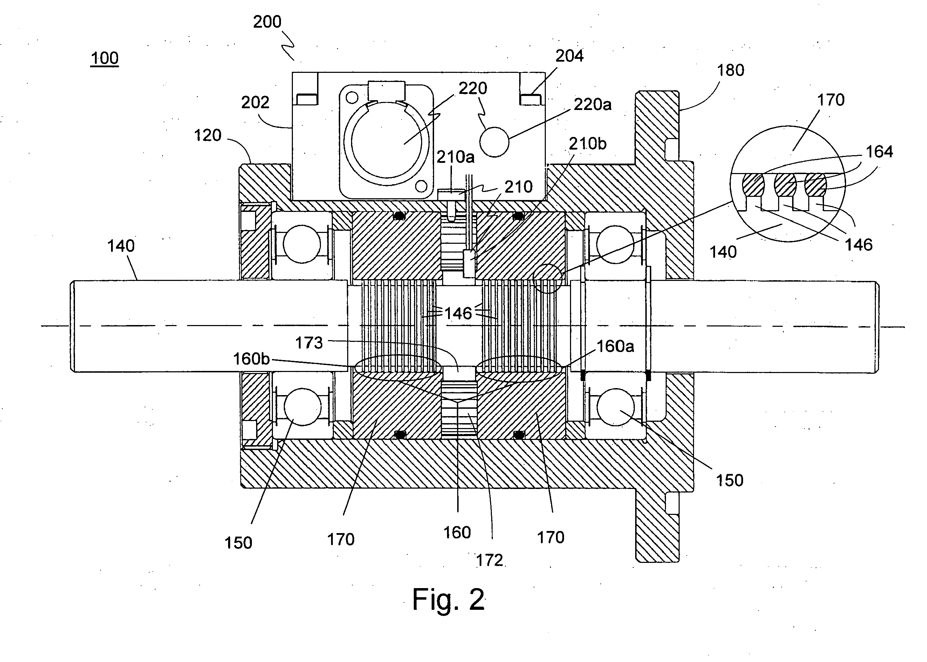

The preferred embodiment of the present invention is illustrated in Figs. 2-3. Figure 2 shows one embodiment of a magnetic fluid rotary feedthrough 100 of the present invention in a partial cross-sectional view. Rotary feedthrough 100 includes a feedthrough housing 120 and a rotary shaft 140 that extends out of feedthrough housing 120. Shaft 140 is magnetically permeable and has two sets of stages or teeth 146. Housing 120 includes a vacuum compatible flange 180 for mounting the rotary feedthrough 100 to a vacuum chamber. Shaft 140 is typically supported by a pair of bearings 150 that are disposed on either side of the magnetic fluid seal 160. The magnetic fluid seal 160 includes two stationary, magnetically-permeable elements 170, which are referred to as pole-pieces. Pole-pieces 170 carry magnetic flux from a permanent magnet or magnets 172, disposed between pole-pieces 170. The magnetic flux is concentrated at shaft 140 by a series of stages or teeth 146 cut into shaft 140. The shape of stages or teeth 160 may be rectangular, triangular, trapezoidal, angular, or any other shape or combinations of the various shapes and is not critical to the present invention. Magnetic fluid or ferrofluid 164 is trapped within the concentrated magnetic flux and acts as "liquid o-rings" at stages 146. Shaft 140 is rotated usually by an electric motor, which can be external or integrated into feedthrough housing 120. The unique feature of the present invention is the inclusion of a combination of one or more sensors, processing electronics and output devices in rotary feedthrough 100. In one embodiment illustrated in Fig. 2, the combination is a feedthrough status monitor device 200.

Feedthrough status monitor device 200 includes a monitor housing 202 connected to feedthrough housing 120, one or more sensors 210, one or more output devices 220, and processing electronics (not shown). One or more housing fasteners 204 secure monitor housing 202 to feedthrough housing 120. The signal processing electronics are preferably housed within monitor housing 202 but could also be integral to feedthrough housing 120 or encased in a separate electronics housing. Each of the one or more sensors 210 is electrically coupled to the signal processing electronics. Signal processing electronics are also electrically coupled to the one or more output devices 220. Sensors 210 monitor various predefined measurable values that reflect the condition of rotary feedthrough 100.

One monitoring method is that of monitoring the pressure between the pole pieces 170, that is, in the magnet space 173. In Fig. 2, such a pressure sensor 210a is shown. This is shown as a micro-electro-mechanical system (MEMS) sensor but any suitable conventional pressure sensing device can be employed, including a simple bellows operated switch. The advantage of a MEMS device is that it can be integrated within the housing 120 of rotary feedthrough 100 and, therefore, be protected from damage. Under normal operating conditions, the pressure in the magnet space 173 is approximately that of the external atmospheric pressure, which is about 1 bar. Due to unforeseen circumstances, however, if the pressure in the magnet space 173 decreases, the drop in pressure would be indicative of failure of the integrity of the ferrofluid seal stages 160a adjacent to the vacuum. In the embodiment shown if Fig. 2, vacuum would still be maintained across the ferrofluid seal 160 and the process would not be in jeopardy as there exists a second set of seal stages 160b on the other side of magnet 172 to maintain the vacuum.

The signal from pressure sensor 210a would indicate that there has been a partial failure of the vacuum integrity and replacement of the feedthrough 100 at the next maintenance cycle is advisable. Although a signal has been activated, it is required to process this signal and alert operators or diagnostic equipment of the problem. The output device 220 can be visual such as, for example, a flashing LED 220a that alerts the operator. By having the signal in an electrical form, however, means that more sophisticated communication methods can be employed. Before detailing output devices it is necessary to highlight the options available as input devices or sensors 210.

Using of inter-pole-piece or magnet-space pressure sensor 210a has been discussed above. However, it can be appreciated that the measurement of pressure can be achieved at any position along the stages 160 such as between each stage or a collection of stages. In addition to the measurement of a simple pressure change, the rate of change of pressure can also be monitored. Whereas the straightforward monitoring of pressure gives a "yes" or "no" signal, rate of change of pressure provides an indication of the severity of the leak and the rate at which it is progressing. Such information, suitably processed, enables alerts to be ranked in terms of urgency. A rapid change of pressure rate would imply an urgent problem that requires immediate attention whereas a slow rate of change would indicate a less urgent problem.

Another indicator of a potential problem is temperature. This can be measured on static elements, such as the pole pieces, with any of the range of temperature measurement sensors available, such as thermocouples, resistance thermometers or thermistors. A resistance thermometer 210b is shown in Fig. 2 although the type and nature of the sensor is not important to the invention. What is important is the ability to measure conditions within a feedthrough, interpret those conditions and communicate that information.

As with pressure measurements, the rate of change of temperature can also be monitored. Temperature measurements can also be made of either or both bearings 150.

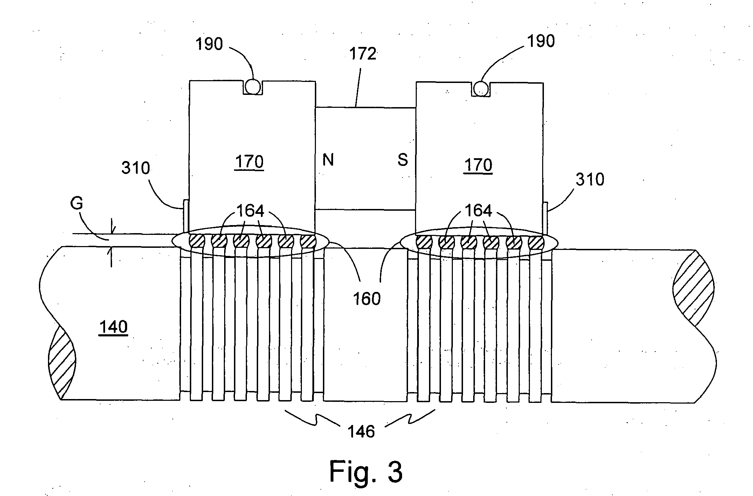

Turning now to Fig. 3, there is illustrated a partial view of a rotary seal. Fig. 3 is an example of one embodiment for measuring temperature differential using two temperature sensors. A shaft 140 is magnetically permeable and has two sets of circumferential stages or teeth 146 disposed around shaft 140. Shaft 140 is typically supported by a pair of bearings 150 (not shown) that are disposed on either side of the magnetic fluid seal 160. The magnetic fluid seal 160 includes two stationary, magnetically-permeable pole pieces 170. Pole pieces 170 have a bore through which shaft 140 is disposed and typically include elastomeric O-rings 190 between the external surface of pole pieces 170 and the internal surface of a housing (not shown) containing the magnetic fluid seal. The size of the bore in pole pieces 170 is such that it creates a relatively small gap or space G between the circumferential stages 146 and the inside surface of the bore of pole pieces 170. Pole-pieces 170 carry magnetic flux from a permanent magnet or magnets 172, disposed between pole-pieces 170. The magnetic flux is concentrated at shaft 140 by the series of stages or teeth 146 cut into shaft 140. The shape of stages or teeth 160 may be rectangular, triangular, trapezoidal, angular, or any other shape or combinations of the various shapes and is not critical to the present invention. Magnetic fluid 164 is trapped within the concentrated magnetic flux and acts as "liquid o-rings" at stages 146. A temperature sensor 310 is positioned on each pole piece 170.

Using two temperature sensors 310 provides a means for measuring the difference in temperature between each of the pole pieces 170. This measurement of temperature differential between pole pieces 170 provides a better indicator of magnetic seal condition than a single temperature measurement of the magnetic seal. There are several advantages of using temperature differential measurements over single temperature measurements of a magnetic fluid seal. Using temperature differential measurements tends to null out external influences that can affect the interpretation of a temperature reading performed using a single temperature sensor. A magnetic fluid seal may experience evaporative losses of the magnetic fluid's base oil, lost stages caused by various factors including, but not limited to, stage blowouts, particulate contamination of the magnetic fluid, chemical contamination of the magnetic fluid, and the like. Any of these conditions degrades a pole piece sealing structure, which includes the pole piece, stage geometry and the magnetic fluid. Measuring the temperature difference between the pole pieces 170 magnifies these degradations since the rate of degradation is not instantaneous across the entire seal but progresses through the magnetic fluid seal over time. This is especially so since the magnetic fluid seal has one side exposed to the atmosphere and the other side exposed to the process environment. This means that as some stages degrade, the temperature of the pole piece aligned with the plurality of stages having the degraded stage(s) will change in operating temperature relative to the pole piece that does not have any degraded stages. The difference between the pole piece with the degraded stage(s) and the next pole piece without any degraded stages indicates the condition of the entire seal.

Other options contemplated by the present invention to enhance the thermal differential include using different magnetic materials for magnet 172 having a lower thermal conductivity. The lower the thermal conductivity, the greater the differential in temperature between pole pieces 170. For example, ferrite or ceramic ferrite at 2.9 W/mC would provide advantageous characteristics to the enhancing the thermal differential. Still another option contemplated by the present invention is the use of different magnetic fluids on either pole piece or using the same magnetic fluid but having different magnetization saturation for each pole piece or on some of the stages within the same pole piece. Yet another option contemplated by the present invention is the inclusion of relatively thin (<1.0 mm thick) insulating shim or an insulating layer between the pole piece 170 and the magnet 172. The shim and/or layer acts as a thermal break and reduces the heat transfer between the magnet 172 and pole piece 170 and again increasing the temperature differential.

The magnets 172 used in feedthroughs 100 are of the Alnico type. However, there is more and more use of the so called rare earth magnets, which allow savings in space and cost. Unfortunately, such magnets have a lower maximum operating temperature and can be irreversibly de-magnetized if they are over heated. Therefore, some form of magnetic sensor, such as a Hall effect device, will allow monitoring of the magnets.

It is in the nature of a magnetic fluid feedthrough 100, especially at high speeds, that the heat generated in the sheared magnetic fluid 164 is transferred to either the stationary pole-piece 170 or the rotating shaft 140. While it is relatively straightforward to remove the heat from pole-piece 170 by using liquid cooling (water is usually employed), removing heat from the rotating shaft 140 is not so simple. Accordingly, shaft 140 is often left un-cooled. A consequence of not cooling shaft 140 is that shaft 140 is often at a considerably higher temperature than pole-piece 170. Where the process of shearing the fluid 164 is the source of the generated heat, temperature measurements of shaft 140 provide a much better approximation of the fluid temperature than measurements of pole-piece 170. Ideally, measuring the magnetic fluid temperature within the gap between the rotating shaft and the stationary pole-piece is preferred. However, as this gap is quite small, typically 50-150 microns, this presents difficulties and therefore shaft temperature measurements are a viable alternative. The simplest way to measure the temperature of the rotating shaft 140 is to use an infra red detector. Again, as with measurements of the pole-piece temperature, measuring and monitoring rate of change of temperature may also be performed.

As noted above, there are issues with the bearing lubricants used in vacuum processes. The degradation of this lubricant, which leads to premature bearing failure, is a potential problem. Condition monitoring of bearings 150 is a viable approach to indicate emerging potential problems. Bearing monitoring can be carried out readily in two possible ways: (1) monitoring the vibration spectrum of the bearings 150 using accelerometers and noting changes; and (2) acoustically using, for example, piezoelectric sensors mounted to the structure to monitor acoustic waves. All methods can be used to generate appropriate signals, suitably amplified, filtered and processed to signify changes in bearing condition.

Most problems associated with deterioration in the condition of feedthrough 100 will manifest themselves in an increase in the torque required to rotate feedthrough 100. As noted above, the surfactant layer means that magnetic fluids tend to be operated at a point on the "volume fraction versus viscosity" curve where small changes in volume fraction will result in significant increases in viscosity. Therefore, long term changes due to evaporation of oil in ferrofluid 164 leads to an increase in volume fraction and an increase in viscosity. This manifests itself as either a change in running torque and/or an increase in temperature of magnetic fluid 164. These can be quite significant. Although less common, it is possible that liquid contamination, often from cleaning solvents used to prepare the vacuum chamber, can reduce the volume fraction resulting in a decrease in viscosity and reduction in torque.

Similarly, any deterioration of the bearing 150, either mechanical or lubricant deterioration, will result in a change in running torque and heat being generated. Consequently, integrated measurement of torque is a useful diagnostic tool especially combined with temperature measurements. The preferred sensors are contactless torque transducers that use surface acoustic wave technology, optical or strain gauge technology. Although the use of traditional torque measuring devices can be used, they require an element to be stationary making dynamic torque measurement a complex and expensive process. Finally, it is also noted that rotational speed sensors may also be integrated into feedthrough 100. The data from these sensors can be used to derive the power taken to rotate feedthrough 100. Another derived variable to assess the condition of feedthrough 100 is the rate of change of torque and/or power.

Many feedthroughs used at high speed and/or high temperature are often cooled, usually using water. Therefore, one can use such derived variables as water flow rate, temperature, temperature rise, and rate of change of these variables as diagnostic tools.

Water cooled feedthroughs 100 use static o-rings (not shown) on the pole-pieces 170 to seal against water. The pole pieces 170 are required to be magnetically permeable and the commonly used stainless steels, while reasonable against corrosion, do suffer more than the nonmagnetic ones. Therefore, by providing a moisture sensor, any water leaking across the o-rings can be detected.

Not all magnetic fluid feedthroughs 100 are used in vacuum applications. Some are used in pressure applications where a gas or chemical needs to be hermetically contained as any leakage of the gas or chemical could have serious consequences. Typical applications are (1) sterilisers where there is an explosion risk or (2) drug processing equipment where there is a potentially fatal risk to operators should any of the drug escape. Embedding suitable sensors within the feedthrough 100 and linking them to the communication devices allows potentially dangerous leaks to be detected before there is a leak to the environment.

Having identified the possible variables that can be measured within the feedthrough 100, it becomes possible to incorporate suitable electronics to process these variables and derive much useful data. From speed measurements, the total number of revolutions can be evaluated. By integrating a timer, elapsed time and total running time can be evaluated. As noted above, from speed and torque, power can be calculated.

Having derived these variables and processed them, it is necessary to communicate these externally. Three situations will be defined:

1. Local, meaning any indicator that is local to the feedthrough 100. Such indicators could be visual, e.g. LED's, shown as reference number 220a in Fig. 2, gauges, or audible devices such as sounders, buzzers or sirens.

2. Remote, where the signal is transmitted, either in digital or analog form, away from the feedthrough 100 but remaining within the machine's or its operator's environment, its operating equipment or operating computer.

3. Global, meaning where the signal is transmitted, either in digital or analog form, away from the feedthrough 100 and outside the immediate machine environment. Typically, this is envisaged as a network or field bus. Ethernet-based systems may incorporate a web server and other network services, including "phone-home" systems, e-mail systems and simple network management protocol systems. Field bus systems would contain a transceiver required for the relevant bus system.

Remote or global signal transmission systems can also be effected by use of appropriate telemetry or wireless communication systems. Such systems are also contemplated by the present invention.

When there is a need to power the integrated electronics, various sources may be used including either integral energy sources such as batteries, power generation either from the rotation or from heat using thermo-electric modules, or by systems that supply power as well as data connectivity for example the Power Over Ethernet (POE) system and other Power Derived from Signal Bus ("Parasitically Powered") systems.

There are many advantages of the present invention. These advantages include, but are not limited to, remote monitoring of the feedthrough, early warning of the condition of the rotary feedthrough to enable maintenance of the feedthrough at a scheduled shut down, advanced warning of a potential problem with a rotary feedthrough or identification of its location in a system with a plurality of feedthroughs, more cost effective maintenance of feedthroughs, and improved reliability of the processes that use feedthroughs.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A magnetic fluid rotary feedthrough system comprising:
a multi-stage magnetic fluid rotary seal adapted to provide a magnetic fluid seal about a shaft for extending between a first environment and a second environment;
one or more sensors integrally mounted within the magnetic fluid rotary feedthrough to sense one or more physical parameters of the multi-stage magnetic fluid rotary seal;
signal processing electronics mounted to or incorporated in the magnetic fluid rotary feedthrough to receive one or more sensor output signals from the one or more sensors, to process the one or more sensor output signals and to output one or more electronic processing signals; and
one or more output devices operatively connected to receive the one or more electronic processing signals from the signal processing electronics to indicate the condition of the multi-stage magnetic fluid rotary seal.

2. The system of Claim 1 wherein the one or more sensors include pressure sensors, temperature sensors, magnetic field sensors, vibration sensors, rotational speed sensors, acoustic wave sensors, torque sensors, chemical sensors, coolant flow rate sensors, coolant temperature sensors, and humidity.

3. The system of Claim 1 or 2 wherein said one or more output sensor signals are digital signals, analog signals, or a combination of digital and analog signals.

4. The system of any one of Claims 1-3 wherein the said one or more electronic processing signals are digital signals, analog signals, or a combination of digital and analog signals.

5. The system of any one of Claims 1-4 wherein the signal processing electronics includes circuit modules for measuring pressure, temperature, magnetic field strength, vibration, rotational speed, acoustics, torque, chemicals, coolant flow, coolant temperature, and humidity.

6. The system of any one of Claims 1-5 further comprising two or more of the same sensors integrally mounted at different locations in the rotary feedthrough to enable differential measurement comparisons between the same sensors.

7. The system of any one of Claims 1-6 wherein the signal processing electronics has a computational circuit for determining the rate of change over time of a measured physical parameter.

8. The system of any one of Claims 2-7 wherein the temperature sensor is adapted to sense the temperature of one or more components selected from the group consisting of a pole piece, a magnet, and a shaft of the multi-stage magnetic fluid rotary seal.

9. The system of any one of Claim 1 and 3-7 wherein the one or more sensors are contact sensors or noncontact sensors.

10. The system of any one of Claims 1-9 wherein the one or more output devices is directly electrically coupled to the signal processing electronics or wirelessly coupled to the signal processing electronics.

11. A method of determining the condition of a magnetic fluid rotary feedthrough, the method comprising:
incorporating a combination of one or more sensors integrally mounted in the magnetic fluid rotary feedthrough and signal processing electronics mounted on or in the magnetic fluid rotary feedthrough, the signal processing electronics being electrically coupled to the one or more sensors for receiving and manipulating one or more sensor signals from the one or more sensors;
providing one or more output devices electrically coupled to the signal processing electronics for receiving one or more electronic processing signals from the signal processing electronics; and
monitoring the one or more output devices to determine the condition of a magnetic fluid seal of the rotary feedthrough.

12. The method of Claim 11 wherein the incorporating step includes incorporating one or more sensors selected from the group consisting of pressure sensors, temperature sensor, magnetic field sensors, vibration sensors, rotational speed sensors, acoustic wave sensors, torque sensors, chemical sensors, coolant flow rate sensors, coolant temperature sensors, and humidity.

13. The method of Claim 11 or 12 wherein the incorporating step includes incorporating two or more similar sensors each in a different location within the rotary feedthrough for monitoring the difference between the signals from the two or more similar sensors.

14. The method of any one of Claims 11-13 further comprising measuring one or more sensor parameters including pressure, temperature, magnetic field strength, vibration, rotational speed, acoustics, torque, chemical, coolant flow, coolant temperature, or humidity.

15. The method of Claim 14 further comprising comparing the one or more parameters of the measuring step to a threshold value and issuing a warning signal if the one or more parameters exceeds the threshold value.

16. The method of Claim 13 further comprising comparing the signal difference of the one or more similar sensors to a threshold value and issuing a warning signal if the difference exceeds the threshold value.
